# EUROPÄISCHE PATENTSCHRIFT

(11) **EP 3 181 711 B1**
(45) Veröffentlichungstag und Bekanntmachung des Hinweises auf die Patenterteilung: **26.02.2020**
(21) Anmeldenummer: 15199831.7
(22) Anmeldetag: 14.12.2015
(51) Int. Cl.: C22C 21/00, C22F 1/02, C22F 1/04, C22C 1/04

(54) **SCANDIUMHALTIGE ALUMINIUMLEGIERUNG FÜR PULVERMETALLURGISCHE TECHNOLOGIEN**
ALUMINIUM ALLOY CONTAINING SCANDIUM FOR POWDER METALLURGY TECHNOLOGIES
ALLIAGE EN ALUMINIUM CONTENANT DU SCANDIUM POUR TECHNOLOGIES DE METALLURGIE DES POUDRES

(43) Veröffentlichungstag der Anmeldung: 21.06.2017
(73) Patentinhaber: Apworks GmbH, 82024 Taufkirchen (DE)
(72) Erfinder: Lenczowski, Blanka, 85579 Neubiberg (DE)
(74) Vertreter: Isarpatent

(56) Entgegenhaltungen:
- DE-A1- 10 352 932
- DE-B3-102013 012 259
- US-A1- 2003 156 967
- US-B1- 6 258 318

## Beschreibung

Die vorliegende Erfindung betrifft eine scandiumhaltige Aluminium-Pulverlegierung, Drähte und Werkstoffe, die diese umfassen, sowie Verfahren zur Herstellung der scandiumhaltigen Aluminium-Pulverlegierung, der Drähte und Werkstoffe, wobei in der scandiumhaltigen Aluminium-Pulverlegierung der Anteil an Scandium erhöht ist.

Insbesondere für die Luftfahrt sind Aluminium-Legierungen dank ihrer geringen Dichte von hoher Bedeutung. In der Vergangenheit wurden vor allem Aluminium-Kupfer-Magnesium und Aluminium-Zink-Magnesium Legierungen verwendet, die jedoch nicht schweißbar sind. Somit wurden in früheren Jahren neue schweißbare Legierungen für die Außenhaut (Blech) und Stringer (Blech- oder Strangpressprofile) der Flugzeugrumpfstruktur entwickelt, welche beispielsweise in US 6.258.318 B1, US 6.676.899 B2, und US2003/0156967 A1 offenbart sind.

Die in den genannten Dokumenten offenbarten Legierungen sind beispielsweise als Knetlegierungen für die Herstellung von Blechstrukturen und Strangpressprofilen geeignet. Es wurden weiterhin Untersuchungen zum Verbessern der Materialeigenschaften mittels Anwendung der Pulvermetallurgie unternommen.

Um die Vorteile der Pulvertechnologie sowie von zum Teil auf der Pulvertechnologie basierenden Verfahren wie z.B. sprühenden Verfahren und ALM (Additive Layer Manufacturing)-Prozesstechnologien - in Abhängigkeit von der Anwendung der Bauteile - im vollen Umfang nutzten zu können, ist es vorteilhaft, prozessoptimierte Legierungen zu designen. Hiermit ist es möglich, ressourceneffiziente und effektive Werkstoffinnovationen als Schüssel zur Optimierung der Bauteileigenschaften - parallel mit der geometrischen Bauteilgestaltung - nutzen zu können. Diese Anforderungen lassen sich üblicherweise durch Legierungsmodifikation, Variation der Kristallisationsbedingungen und Anpassung der Fertigungsbedingungen, wie beispielsweise eine anschießende Wärmebehandlung, erzielen. Darüber hinaus ist es vorteilhaft, ein legierungsspezifisches Konstruieren und Fertigstellen von Bauteilen wie z. B. durch lokales Kühlen/Heizen zum Spannungsabbau (Eigenspannungen) oder durch Minimierung der Materialfehler aus der Erstarrung mittels anschießender Wärmebehandlung, zu unterstützen.

Heutzutage werden für ALM-Prozesse und Sprühverfahren schwerpunktmäßig Standardwerkstoffe verwendet, z. B. bei Ti-Legierungen vor allem der Werkstoff Ti6Al4V, und bei Al-Legierungen AlSi10Mg.

Die ALM-Prozesse stellen hierbei vor allem eine technologische Konkurrenz zu den Feingusstechnologien, die vor allem zur Herstellung von komplexen und - in Abhängigkeit von der Legierung - dünnwandigen, belastungsoptimierten Bauteilen für die Luftfahrt oder Medizintechnik verwendet werden. Für das Feingussverfahren werden hier gewöhnlich die Aluminium-Legierungen A357 (AlSi7Mg0.6) für dünnwandige Strukturen und A201/KO1 (AlCu5MgTiAg) als festere Variante für Bauteile mit dickeren Wanddicken eingesetzt.

Die US 2003/156967 A1 offenbart eine natürlich harte Aluminiumlegierung für Halbzeuge, welche neben Magnesium, Titan, Beryllium, Zirkonium, Scandium und Cer auch aus Mangan, Kupfer, Zink und einer Elementgruppe enthaltend Eisen und Silizium hergestellt ist, wobei das Verhältnis von Eisen zu Silizium in einem Bereich von 1 bis 5 liegt.

Es besteht ein Bedarf an weiteren Legierungen, die zur Fertigung von hochfesten Bauteilen verwendet werden können und die einfach verarbeitet werden können.

Es ist daher Aufgabe der vorliegenden Erfindung, eine Legierung bereitzustellen, die einfach bei der Verarbeitung zur Herstellung hochfester Werkstoffe verwendet werden kann.

Erfindungsgemäß wird diese Aufgabe durch eine scandiumhaltige Aluminium-Pulverlegierung mit den Merkmalen des Patentanspruchs 1, einen diese Legierung umfassenden Draht sowie einen diese Legierung umfassenden Werkstoff bzw. ein entsprechendes Werkstück, sowie Verfahren zur Herstellung des Werkstoffes bzw. des Werkstücks, des Drahtes sowie der scandiumhaligen Aluminium-Pulverlegierung gelöst.

Ein Gegenstand der vorliegenden Erfindung ist somit eine neue, hochfeste, schweißbare scandiumhaltige Aluminium-Pulverlegierung, insbesondere Al-Mg-Sc Legierung (5xxx), die ggf. zu einem Draht geformt werden kann, und die unter anderem für die Applikation in pulvermetallurgischen Technologien u.a. auch für Additive Layer Manufacturing (ALM) und Spritzverfahren, oder als Schweißzusatzwerkstoff oder zur Herstellung von Halbzeugen oder kompletten Bauteilen geeignet ist. Anhand der unterschiedlichen Prozessführung für die üblichen Al-Mg-Scbasierten Legierungen erreichen üblicherweise stranggepresste Halbzeuge nicht die hohen mechanischen Eigenschaften von gewalzten Strukturen, so dass ein neuer Ansatz unter Verwendung von Pulvern hier Abhilfe schaffen kann. Auch werden üblicherweise hohe Festigkeitswerte von deutlich über 400 MPa nur mit Knetlegierungen erzielt, die jedoch im normalen Gussverfahren nicht oder nur schwer gießbar sind.

Eine der vorliegenden Erfindung zugrunde liegende Idee besteht darin, dass der Anteil an Scandium in der erfindungsgemäßen Pulverlegierung gesteigert werden kann, wodurch die Festigkeit der Pulverlegierung verbessert werden kann sowie von damit hergestellten Drähten und Werkstoffen.

Es wurden hierzu Untersuchungen zum Verbessern der Materialeigenschaften mittels Anwendung der Pulvermetallurgie unternommen. Es wurde gefunden, dass das festigkeitssteigende Potential vom Scandium genutzt werden kann, indem durch eine Erhöhung der Abkühlungsgeschwindigkeit während der Erstarrung mehr Scandium in Mischkristall (also beispielsweise höher 0,35 Gew.-% Sc, insbesondere mehr als 0,56 Gew., bezogen auf den Mischkristall bzw. ein Legierungspulver, welches diesen umfasst) gelöst wird als bei konventionellen Herstellungsverfahren in der Ingot-Metallurgie (IM), und der gelöste Sc-Anteil kann dann im nächsten Schritt genutzt werden. Durch Hinzufügen bzw. Erzeugen von Legierungselementen, die sphärische, intermetallische Phasen bilden und eventuell noch die Diffusion verringern, können solche thermisch stabile Legierungen für die Pulvertechnologie genutzt werden und viele Vorteile mitbringen. Mittels einer angepasste Abkühlungsgeschwindigkeit kann ein Pulver mit geeigneter Pulvergröße, Pulverform, Mikrostruktur gewonnen werden, beispielsweise durch Verdüsen oder Zerstäuben, und in weiteren Verfahren, beispielsweise der Pulvermetallurgie (Sintern, Hippen, Pressen, usw.), sowie mittels weiterer Verfahren basierend auf Pulvertechnologie wie ALM- (Pulverbett-, etc.) oder, Sprühverfahren zu Halbzeugen oder Endbauteilen/Bauteilen verarbeitet werden, z.B. durch Aufsprühen von Stringern und/oder Versteifungselementen (z.B. auf ein Blech), und/oder zu funktionalen Schichten. Auch können aus der erfindungsgemäßen scandiumhaltigen Aluminium-Pulverlegierung Werkstoffe wie beispielsweise Schweißzusatzwerkstoffe (SZW) hergestellt werden, die bei einem weiteren Bearbeiten, wie etwa einem Auftragsschweißen, zum Einsatz kommen können.

Durch die Zugabe vom Scandium können einerseits die mechanischen Eigenschaften des Materials und andererseits die Schweißbarkeit und Korrosionsbeständigkeit im Vergleich zu Sc-freien Legierungen verbessert werden, wobei sich hierbei der erhöhte Anteil positiv auswirkt.

In den Unteransprüchen finden sich vorteilhafte Ausgestaltungen und Verbesserungen der Erfindung.

Die Ausgestaltungen und Weiterbildungen in den Patentansprüchen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Im Folgenden wird die Erfindung mit Bezug auf beispielhafte Ausführungsformen näher erläutert.

Gemäß einem ersten Aspekt betrifft die vorliegende Erfindung eine scandiumhaltige Aluminium-Pulverlegierung, umfassend, in Gew.%, bezogen auf die Gesamtzusammensetzung der Legierung

| | |
|---|---|
| Mg | 0,5-10 |
| Sc | 0,4-30, bevorzugt 0,4-3, weiter bevorzugt 0,6-3 |
| Zr | 0,05-1,5 |
| Mn | 0,01-1,5 |
| Zn | 0-2,0 |
| Ti | 0,01-0,2 |
| Ce | ≤ 0,25 |
| Be | 0-0.004 |
| B | 0-0.008 |
| Si | ≤ 0,25 |
| Fe | ≤ 0,25 |
| Hf | ≤ 0,5, bevorzugt 0,15-0,25 |

mindestens ein Element, ausgewählt aus der Gruppe, bestehend aus der Lanthangruppe außer Cer (La, Pr, Nd, Pm, Sm, Eu, Gd, Tb, Dy, Ho, Er, Tm, Yb, Lu), Y, Ga, Nb, Ta, W, V, Ni, Co, Mo Li, Th, Ag, wobei der Anteil dieser Elemente maximal 0,5 beträgt
sowie Al als Rest mit weiteren Verunreinigungen von insgesamt maximal 0,5 Gew.%.

In der erfindungsgemäßen scandiumhaltigen Aluminium-Pulverlegierung kann durch das Sc eine Erhöhung der Härte erzielt werden sowie eine bessere Schweißbarkeit. Bevorzugt ist der Anteil an Sc in der Legierung, bezogen auf die Gesamtzusammensetzung der Legierung, 0,4-3,0 Gew.%, weiter bevorzugt 0,6-3 Gew.%. Durch das erfindungsgemäße Verfahren zur Herstellung der scandiumhaltigen Pulverlegierung kann hierbei ein Anteil an Sc im Pulver erzielt werden, der über der Löslichkeit an Sc in der Legierung bei 600°C liegt, welche beispielsweise bei 0,56 Gew.%, bezogen auf die Legierung, liegen kann. Die erfindungsgemäße scandiumhaltige Aluminium-Pulverlegierung kann 0,1-30 Gew.-% Scandium beinhalten, bezogen auf die Gesamtzusammensetzung, wobei der Scandiumanteil in der Legierung von der Abkühlungsgeschwindigkeit bei der Pulverherstellung und dem herzustellenden Korndurchmesser der Partikel im Pulver abhängen kann. Im allgemeinem ergibt sich hierbei mit abnehmender Pulvergröße und größerer Abkühlungsrate ein höherer Scandiumgehalt. Als Korndurchmesser der Partikel in der erfindungsgemäßen scandiumhaltigen Aluminium-Pulverlegierung wird hierbei gemäß bestimmten Ausführungsformen die maximale Schnittlänge innerhalb eines Partikels angesehen, also die maximale Länge, die eine gerade Linie innerhalb des Partikels zwischen zwei Außenflächen bzw. Oberflächenpunkten des Partikels aufweist.

Gemäß bestimmten Ausführungsformen beträgt der Anteil an Zr max. die Hälfte (d.h. 50 Gew.%), bevorzugt max. 1/3 der Gew.% des Sc-Anteils in der scandiumhaltigen Aluminium-Pulverlegierung. Hierbei kann durch den Zr-Anteil eine erhöhte Warmfestigkeit und bessere Stabilität erzielt werden. Durch den Zr-Anteil kann Sc in gebildeten Primärpartikeln ersetzt werden, so dass sich Primärpartikel der Formel Al₃(Sc₁₋ₓZrₓ), x< 1 bilden können, wie dies etwa in DE 103 52 932 A1 beschrieben ist.

Durch einen Zinkzusatz kann eine exzellente Korrosionsbeständigkeit auch nach Langzeitauslagerung bei erhöhten Temperaturen erzielt werden, selbst wenn die Legierung in Form von Pulvern oder Draht vorliegt. Hierdurch eignen sich die Pulver bzw. Drähte unter anderem für die Applikation mit pulvermetallurgischen Technologien, u.a. auch für Additive Layer Manufacturing (ALM) und Spritzverfahren, oder als Schweißzusatzwerkstoff oder auch zur Herstellung von Halbzeugen oder kompletten Bauteilen. Gemäß bestimmten Ausführungsformen beträgt der Zn-Anteil in der erfindungsgemäßen scandiumhaltigen Aluminium-Pulverlegierung 0,05-2,0 Gew.%, bevorzugt 0,1-1,5 Gew.%, weiter bevorzugt 0,2-1,0 Gew.%, bezogen auf die Gesamtzusammensetzung.

Der Anteil an Hf in der erfindungsgemäßen Legierung umfasst 0-0,5 Gew.%, gemäß bestimmten Ausführungsformen 0,15-0,25 Gew.%, bezogen auf die Legierung. Ein zu hoher Anteil an Hf in der Legierung kann die Löslichkeit von Sc in der Legierung herabsetzen.

In der erfindungsgemäßen Legierung umfasst die Lanthangruppe Lanthan (La) und sich die anschließenden Elemente der Lanthanoide Ce, Pr, Nd, Pm, Sm, Eu, Gd, Tb, Dy, Ho, Er, Tm, Yb, Lu, und ein Element oder mehrere Elemente hiervon können in der erfindungsgemäßen scandiumhaltigen Aluminium-Pulverlegierung vorhanden sein, zusätzlich oder anstelle von einem oder mehreren der Elemente, die ausgewählt sind aus Y, Ga, Nb, Ta, W, V, Ni, Co, Mo Li, Th, Ag. Der Anteil all dieser Elemente außer Cer in der erfindungsgemäßen scandiumhaltigen Aluminium-Pulverlegierung beträgt jedoch nicht mehr als 0,5 Gew.%, bezogen auf die gesamte Zusammensetzung der Pulverlegierung. Infolge dessen, dass zumindest jedoch eines dieser Elemente in der erfindungsgemäßen scandiumhaltigen Aluminium-Pulverlegierung vorhanden ist, ist der Anteil dieser Gruppe jedoch größer als 0 Gew.%.

Neben den erwähnten Elementen kann die erfindungsgemäße scandiumhaltige Aluminium-Pulverlegierung noch weitere Elemente als unvermeidbare Verunreinigungen beinhalten, welche z.B. prozessbedingt und/oder aufgrund der verwendeten Ausgangsstoffe in die Legierung eingebracht werden können.

Gemäß bestimmten Ausführungsformen ist der Anteil an Zr + Ti der erfindungsgemäßen scandiumhaltigen Pulverlegierung in Summe kleiner ist als 1/3 der Gew.% des Anteils an Sc. Zirkonium und Titan haben hierbei eine ähnliche Wirkung wie Sc und führen zu einer verbesserten Härte und thermischen Stabilität, können jedoch bei einem zu hohen Anteil zu einer Herabsetzung des Anteils an Sc führen.

Gemäß bestimmten Ausführungsformen weisen die Partikel des Pulvers der scandiumhaltigen Aluminium-Pulverlegierung einen Korndurchmesser von 1 bis 250 µm, bevorzugt 5 bis 150 µm, auf. Eine entsprechende Bestimmung des Korndurchmessers des Pulvers erfolgt hierbei gemäß bestimmten Ausführungsformen mittels Siebanalyse, wobei die Siebanalyse hierbei mit Sieben mit entsprechender Maschenweite durchgeführt werden kann, also beispielsweise mit Sieben mit Maschenweiten von 1, 5, 20, 60, 90, 150 und 250 µm. Die Siebanalyse ist hierbei nicht besonders beschränkt und kann beispielsweise mit Siebmaschinen der Firma Retsch, oder auch anderen Siebmaschinen durchgeführt werden. Partikel mit einer gewünschten Partikelgröße - z.B. für eine entsprechende Weiterverarbeitung bzw. abhängig vom weiteren Verfahren und/oder der Anwendung - können aus der erfindungsgemäßen scandiumhaltigen Aluminium-Pulverlegierung beispielsweise durch Aussieben entsprechender Fraktionen erhalten werden.

Gemäß einem weiteren Aspekt betrifft die vorliegende Erfindung ein Verfahren zur Herstellung der erfindungsgemäßen scandiumhaltigen Aluminium-Pulverlegierung, wobei eine Mischung umfassend, in Gew.%, bezogen auf die Gesamtzusammensetzung der Mischung,

| | |
|---|---|
| Mg | 0,5-10 |
| Sc | 0,4-40, bevorzugt 0,4-30, weiter bevorzugt 0,4-3, noch weiter bevorzugt 0,6-3 |
| Zr | 0,05-1,5 |
| Mn | 0,01-1,5 |
| Zn | 0-2,0 |
| Ti | 0,01-0,2 |
| Ce | ≤ 0,25 |
| Be | 0-0.004 |
| B | 0-0.008 |
| Si | ≤ 0,25 |
| Fe | ≤ 0,25 |
| Hf | ≤ 0,5 |

mindestens ein Element, ausgewählt aus der Gruppe, bestehend aus der Lanthangruppe außer Cer (La, Pr, Nd, Pm, Sm, Eu, Gd, Tb, Dy, Ho, Er, Tm, Yb, Lu) Y, Ga, Nb, Ta, W, V, Ni, Co, Mo Li, Th, Ag, wobei der Anteil dieser Elemente maximal 0,5 beträgt,
sowie Al als Rest mit weiteren Verunreinigungen von insgesamt maximal 0,5 Gew.%,
geschmolzen, versprüht oder verdüst und mit einer Abkühlrate von mehr als 10 K/s, bevorzugt mehr als 10² K/s, weiter bevorzugt von mehr als 10³ K/s, abgekühlt wird.

Im Verfahren zur Herstellung der erfindungsgemäße scandiumhaltigen Aluminium-Pulverlegierung kann die Legierung mittels einer Mischung, beispielsweise Vorlegierung, hergestellt werden, die auch mehr als 30 Gew.-% Scandium beinhalten kann, jedoch ist aus Kostengründen ein geeignetes Einstellen des Sc-Anteils bevorzugt, um entsprechend die Verluste an Sc zu minimieren.

Das Schmelzen der Mischung ist hierbei nicht besonders beschränkt und kann geeignet erfolgen, z.B. auch unter Schutzgasatmosphäre. Das Schmelzen kann hierbei bei einer Temperatur von 700°C oder mehr, bevorzugt 750°C oder mehr, weiter bevorzugt 800°C oder mehr, erfolgen. Gemäß bestimmten Ausführungsformen kann die Schmelze nach dem Erschmelzen an einer bestimmten Temperatur gehalten werden, wobei die Temperatur und Haltezeit abhängig sein können von den einzelnen Zusatzelementen und deren Menge.

An das Schmelzen kann sich gemäß bestimmten Ausführungsformen das Versprühen oder Verdüsen direkt anschließen, also ohne einen Beförderungsschritt, wobei auch diese alternativen Schritte nicht besonders beschränkt sind und durch geeignete Sprühwerkzeuge, Düsen, etc. erfolgen können. Auch kann die Schmelze gemäß bestimmten Ausführungsformen zum Versprühen oder Verdüsen befördert werden, beispielsweise durch ein Rohr, etc. Ein Versprühen kann beispielsweise in einen Gasstrom, wie etwa bei der Gasverdüsung oder der Gasatomisierung, erfolgen, beispielsweise über übersättigte Mischkristalle mit Mg/Sc/Zr und anderen Elementen.

Gemäß bestimmten Ausführungsformen kann bei dem erfindungsgemäßen Verfahren zur Herstellung der scandiumhaltigen Aluminium-Pulverlegierung das Abkühlen der geschmolzenen Mischung beim und/oder nach dem Versprühen oder Verdüsen unter Verwendung eines inerten Gases wie beispielsweise He, Ne, Ar, N oder Mischungen davon erfolgen. Hierbei kann der Gasstrom bzw. die Menge an eingebrachtem Gas im Verhältnis zur Menge an versprühter oder verdüster Mischung geeignet eingestellt werden, um eine entsprechende Kühlrate zu erreichen. Darüber hinaus kann auch beispielsweise die Geometrie beim Versprühen oder Verdüsen des Gases wie auch der Ort und die Richtung(en) des Gaseintrags einen Einfluss auf die Abkühlrate und/oder die Partikelgröße des erzeugten Pulvers haben, so dass der Fachmann hier eine entsprechende einfache Möglichkeit hat, eine geeignete Abkühlrate und/oder Partikelgröße und/oder-form im erzeugten Pulver einzustellen. Durch das inerte Gas kann entsprechend eine Abscheidung der Partikel der erfindungsgemäßen Pulverlegierung erfolgen.

Gemäß bestimmten Ausführungsformen erfolgt die Abkühlung mit einer Abkühlrate von mehr als 10 K/s, bevorzugt mehr als 10² K/s, weiter bevorzugt von mehr als 10³ K/s. Ein Abkühlen kann hierbei auch mit Abkühlraten von mehr als 10⁵ K/s, 10⁶ K/s oder 107 K/s, beispielsweise mit 5x10⁷ K/s oder mehr, beispielsweise unter Verwendung von He als Kühlgas, erfolgen. Gemäß bestimmten Ausführungsformen erfolgt hierbei die Weiterverarbeitung in einer Schutzgasatmosphäre mit einem inerten Gas, z.B. Ar, N, He, Ne oder deren Mischungen. Das Abkühlen erfolgt hierbei bevorzugt kontrolliert, beispielsweise durch Verwendung von inertem Gas.

Durch das erfindungsgemäße Verfahren wird insbesondere eine scandiumhaltige Aluminium-Pulverlegierung erhalten, die Mischkristalle aufweist, also neben einer Primärphase auch eine Sekundärphase, wobei nicht alle Partikel in der scandiumhaltigen Aluminium-Pulverlegierung eine solche Struktur aufweisen müssen. Bevorzugt ist jedoch wenig oder keine Primärphase vorhanden. Das Vorhandensein von Primärphasen und Sekundärphasen sowie deren Materialien kann hierbei beispielsweise mikroskopisch, beispielsweise durch optische Mikroskopie, TEM (Tunnelelektronenmikroskopie), REM (Rasterelektronenmikroskopie), etc. erfolgen, ggf. in Verbindung mit analytischen Verfahren wie XPS (Röntgenphotoelektronenspektroskopie), IR, etc. bestimmt werden, wobei eine Bestimmung der Legierungszusammensetzung auch beispielsweise nasschemisch erfolgen kann. Insbesondere kann hierbei die Primärphase gemäß bestimmten Ausführungsformen eine Al₃(Sc, Zr)-Phase (wobei Teile des Sc im Al₃Sc-Gitter durch Zr ersetzt sind) aufweisen, und es findet eine Anreicherung des Sc im Mischkristall statt.

Für eine geeignete Abkühlungsgeschwindigkeit sowie Pulvergröße und -form ist hierbei insbesondere das Gas-Legierungsbestandteil-Massenstromverhältnis wichtig, wobei dieses von der genauen chemischen Zusammensetzung und somit der Schmelztemperatur - und dementsprechend von der Viskosität der Schmelze - abhängen kann, so dass beispielsweise eine höhere Gasgeschwindigkeit zu einer höherer Abkühlgeschwindigkeit der Pulver führt und somit zu einer höheren Übersättigung des Mischristalls mit Sc. Damit Scandium seine "Fähigkeiten" voll im späteren "Verarbeitungsprozess" entfalten kann, ist es vorteilhaft, dass ein bestimmtes Verhältnis zwischen abgebundenem Scandium im "Ausgangsmaterial" in Form von Primärphase und Scandium gelöst im Mischkristall eingehalten wird, damit ein ausreichender Anteil an Sekundärphase ausgeschieden werden kann und somit die wichtige Ausscheidungshärtung zu einem späterem Zeitpunkt stattfinden kann. Dies ist insbesondere dadurch der Fall, dass in Abhängigkeit vom Ausgangsmaterial bzw. der Anfangsmischung/Mischung hier die Abkühlrate höher 10 K/s, bevorzugt höher als 10² K/s, weiter bevorzugt 10³ K/s und für höhere Scandium-Gehalte bis 5x10⁷K/s und mehr ist.

Gemäß bestimmten Ausführungsformen wird die Schmelze derart versprüht/verdüst, dass das Pulverkorn sphärisch ist und möglichst ohne Satelliten vorliegt, insbesondere mit einem Korndurchmesser von 1 bis 250 µm, bevorzugt 5 bis 150 µm. Für verschiedene Anwendungen der erfindungsgemäßen scandiumhaltigen Aluminium-Pulverlegierung ergeben sich hierbei bevorzugte Korndurchmesser, beispielsweise für ALM 20-60 µm und für weitere Sprühverfahren 5-90 µm, beispielsweise 5-60 µm, oder auch anderen Bereiche. Bevorzugt sind die Primärpartikel der Al₃(Sc, Zr)-Phase der Primärphase nicht grösser als 20 µm, weiter bevorzugt kleiner als 15 µm, noch weiter bevorzugt kleiner als 2 µm. Bevorzugt ist keine Primärphase vorhanden.

Gemäß einem weiteren Aspekt betrifft die vorliegende Erfindung einen Draht umfassend die erfindungsgemäße scandiumhaltige Aluminium-Pulverlegierung. Gemäß bestimmten Ausführungsformen besteht der Draht aus der erfindungsgemäßen scandiumhaltigen Aluminium-Pulverlegierung. Darüber hinaus ist der Draht nicht weiter beschränkt und kann von beliebiger Länge und Dicke sein sowie auch von beliebiger Form. Beispielsweise kann der Draht einen in Querrichtung einen runden Querschnitt aufweisen, jedoch aber auch einen eckigen, etc. Für die weitere Verarbeitung des Drahtes ist es jedoch gemäß bestimmten Ausführungsformen bevorzugt, dass der Draht eine geringe Dicke aufweist, so dass er nach einem Schmelzen mit einer hohen Abkühlrate von beispielsweise mehr als 10 K/s, bevorzugt mehr als 10² K/s, weiter bevorzugt von mehr als 10³ K/s, abgekühlt werden kann. Hierzu kann der Draht in Querrichtung beispielsweise eine Durchmesser (bei rundem Querschnitt) oder eine maximale Schnittlänge in Querrichtung (beispielsweise von Ecke zu Ecke oder Kante zu Kante) von 0,6-5 mm, bevorzugt 0,8-1,6 mm aufweisen.

Die Herstellung des erfindungsgemäßen Verfahrens ist nicht besonders beschränkt und kann übliche Verfahren umfassen, etwa ein Verpressen zu einem Barren oder Ingot, gefolgt von einem Ziehen des Drahts, oder ein Verdichten in einer Hülle, gefolgt vom Drahtziehen. Gemäß bestimmten Ausführungsformen erfolgt die Herstellung des Drahts durch Verpressen und Ziehen zu einem Draht, wobei die Prozessparameter wie der Druck beim Verpressen, die Zuggeschwindigkeit beim Drahtziehen, etc. nicht besonders beschränkt sind und geeignet eingestellt werden können.

Gemäß einem weiteren Aspekt betrifft die vorliegende Erfindung einen Werkstoff oder ein Werkstück, welcher bzw. welches die erfindungsgemäße scandiumhaltige Aluminium-Pulverlegierung oder den daraus hergestellten erfindungsgemäßen Draht umfasst. Hierbei ist der Werkstoff oder das Werkstück nicht besonders beschränkt. Beispielsweise kann es sich bei dem Werkstoff um einen Schweißzusatzwerkstoff handeln, in dem neben der erfindungsgemäße Pulverlegierung weitere Bestandteile enthalten sein können. Beispiele für ein Werkstück umfassen beispielsweise Bauteile oder Halbzeuge, die unter Verwendung der erfindungsgemäßen scandiumhaltigen Aluminium-Pulverlegierung oder dem erfindungsgemäßen Draht hergestellt worden sind. Die darüber hinaus im Bauteil oder Halbzeug enthaltenen Komponenten sind nicht besonders beschränkt und können beispielsweise Bauteile aus der Automobil-, Luftfahrt- oder Raufahrtindustrie oder der Medizintechnik sein.

Gemäß bestimmten Ausführungsformen liegt die scandiumhaltige Aluminium-Pulverlegierung im Werkstück oder Werkstoff, beispielweise in einem Werkstück wie einem Bauteil oder einem Halbzeug, in einer funktionellen Schicht vor. Eine solche Schicht kann beispielsweise pulvertechnisch, beispielsweise mittels ALM unter Verwendung von Lasern und einem Kühlgas, abgeschieden werden.

Das Verfahren zur Herstellung eines entsprechenden Werkstücks oder Werkstoffs aus der erfindungsgemäßen Pulverlegierung ist erfindungsgemäß nicht besonders beschränkt und kann übliche Verfahren wie Verdichten, Schmelzen, Sintern, etc. umfassen.

Gemäß einem weiteren Aspekt umfasst die vorliegende Erfindung jedoch ein Verfahren zur Herstellung eines erfindungsgemäßen Werkstoffs oder Werkstücks, wobei die erfindungsgemäße scandiumhaltige Aluminium-Pulverlegierung oder der erfindungsgemäße Draht erhitzt und im Anschluss mit einer Abkühlrate von mehr als 10 K/s, bevorzugt mehr als 10² K/s, weiter bevorzugt von mehr als 10³ K/s, abgekühlt werden. Ein Abkühlen kann hierbei auch mit Abkühlraten von mehr als 10⁵ K/s, 10⁶ K/s oder 10⁷ K/s, beispielsweise mit 5x10⁷ K/s oder mehr, beispielsweise unter Verwendung von He als Kühlgas, erfolgen. Gemäß bestimmten Ausführungsformen erfolgt hierbei die Weiterverarbeitung in einer Schutzgasatmosphäre mit einem inerten Gas, z.B. Ar, N, He, Ne oder deren Mischungen. Das Abkühlen erfolgt hierbei bevorzugt kontrolliert, beispielsweise durch Verwendung von inertem Gas.

Hierbei ist das Erhitzen nicht besonders beschränkt und kann beispielsweise durch Konvektion, mittels Laser, etc. erfolgen, beispielsweise auf Temperaturen von 700°C oder mehr, bevorzugt 750°C oder mehr, weiter bevorzugt 800°C oder mehr,

Durch die hohe Abkühlrate kann sichergestellt werden, dass der hohe Anteil an Sc, der sich in der erfindungsgemäßen Pulverlegierung, insbesondere in der Sekundärphase außerhalb der Primärphase, finden kann, auch im Werkstoff oder Werkstück beibehalten werden kann, und das Sc nicht bei der Herstellung ausgetrieben wird.

In Folge des thermischen Einflusses bei der Weiterverarbeitung der erfindungsgemäßen Pulverlegierung oder des erfindungsgemäßen Drahts bei der Werkstoff- oder Werkstückherstellung oder auch bei mittels Pulvermetallurgie (z.B. Sintern; diverse ALM-Verfahren oder auch Verbindungsverfahren wie Schweißen) hergestellten oder untereinander verbundenen Bauteilen oder bei Verbindung mit einem anderem Material oder anderen Halbzeugen oder Bauteilen (z.B. Blechen, Profilen, etc.) kommt es durch den Wärmeeintrag bzw. durch ein Anschmelzen oder Schmelzen zu einem Zerfall der festen Lösung in der erfindungsgemäßen Pulverlegierung oder dem erfindungsgemäßen Draht mit einer Bildung von sekundären, dispersverteilten Partikeln, oder auch zu deren Koagulation. Mit zunehmendem Sc-Gehalt ist die Entmischung schneller und startet früher. Die Koagulationsrate von sekundären Partikeln bei der Entmischung aus dem Mischkristall steigt ebenfalls mit zunehmendem Sc-Gehalt in Mischkristall, so dass hier höhere Abkühlungsraten bevorzugt sind.

Gemäß bestimmten Ausführungsformen wird der Werkstoff oder das Werkstück nach dem Abkühlen auf eine Temperatur von 100-400°C, bevorzugt auf 225-350°C, erwärmt, d.h. es findet nach dem Abkühlen mit der hohen Abkühlrate ein weiteres Erwärmen statt. Dieses kann hierbei auch Im Hinblick auf ein Substrat bzw. weitere Materialien im Werkstoff oder Werkstück geeignet angepasst werden. Hierdurch kann, insbesondere bei ALM-Techniken oder unter Verwendung eines erfindungsgemäßen Drahtes, eine definierte Abscheidung aus der Sekundärphase erfolgen. Bei Temperaturen von mehr als 400°C kann eine Koagulation erfolgen, was nicht bevorzugt ist.

Um die guten Eigenschaften der Sc-haltigen Aluminium-Pulverlegierung bzw. des Drahts in möglichst hohem Maß beizubehalten, werden gemäß bestimmten Ausführungsformen bei der Herstellung von Werkstoffen oder Werkstücken mit schmelzenden bzw. anschmelzenden Verfahren, z.B. ALM, Spritzen, Schweißen möglichst dünnwandige Strukturen mit Wanddicken von mehr als 0 bis 100 mm, bevorzugt bis 50 mm, weiter bevorzugt bis 10 mm, hergestellt, wobei die Werkstückgröße nicht besonders beschränkt ist und in mindestens einer Abmessung auch bis zu 10 m betragen kann. Die hohen Abkühlungsraten im erfindungsgemäßen Verfahren zur Herstellung von Werkstücken oder Werkstoffen tragen dazu bei, dass eine optimale Ausscheidungsverteilung der primären und - in benachbarten, nicht schmelzenden, jedoch mit Wärmeeinfluss beeinträchtigten Bereichen - auch sekundären Teilchen erhalten werden kann und bei anschließenden Wärmebehandlung sekundär Ausscheidungen sowohl in der "Schmelzzone" als auch im restlichen Material ausgeschieden werden können. Hierdurch zeigt das Material eine geringe Heißrissempfindlichkeit und somit auch eine Eignung für derartige ALM-Prozesse.

Nach dem Erwärmen kann der Werkstoff oder das Werkstück wiederum auf Raumtemperatur (beispielsweise 20-25°C, z.B. 20°C) abgekühlt werden, wobei hierbei das Abkühlen nicht besonders beschränkt ist.

Anstelle des weiteren Erwärmen oder bevorzugt auch im Anschluss können sich weitere Verfahrensschritte anschließen, wie etwa ein Sintern, Hippen, Pressen, usw., um optimale Materialeigenschaften zu erreichen.

Gemäß bestimmten Ausführungsformen wird im Verfahren zur Herstellung der Werkstücke oder Werkstoffe die erfindungsgemäße scandiumhaltige Aluminium-Pulverlegierung pulvermetallurgisch abgeschieden. Hierbei kann eine Abscheidung beispielsweise mittels ALM oder verwandten Techniken erfolgen, so dass beispielsweise funktionelle Schichten umfassend die erfindungsgemäße scandiumhaltige Aluminium-Pulverlegierung oder bestehend daraus hergestellt werden können.

Bei der Herstellung der Werkstücke oder Werkstoffe kann durch die Verwendung der erfindungsgemäßen scandiumhaltigen Aluminium-Pulverlegierung und dem Erhitzen und schnellen Abkühlen die Bildung von kohärenten feinverteilten Sekundärphasen mit Größen von 1-50 nm, bevorzugt 2-20 nm erfolgen, wie beispielsweise mittels TEM oder REM beobachtet werden kann.

Auch können mehrere Werkstoffe oder Werkstücke verwendet werden, oder beispielsweise verschiedene Düsen, um multifunktionale Bauteile herzustellen.

Das erfindungsgemäße Verfahren zur Herstellung von Werkstücken oder Werkstoffen eignet sich insbesondere zur Herstellung von Bauteilen in der Luftfahrtindustrie, dem Automobilbau, dem Werkzeugbau, der Medizintechnik, etc., insbesondere für Luft- und Raumfahrtanwendungen für Strukturkomponenten .bei denen eine gute mechanische Stabilität erforderlich ist und die auch thermisch beansprucht werden können. Die einzelnen Werkstücke, z.B. Bauteile oder Halbzeuge, können mit diversen Schweißverfahren, auch unter Verwendung eines erfindungsgemäßen Schweißzusatzstoffs, zu größeren Bauteilen aus artgleichen oder nicht artgleichen Materialien zusammengeschweißt werden. Auch kann die erfindungsgemäße Aluminium-Pulverlegierung oder erfindungsgemäße Drähte, Werkstoffe oder Werkstücke an andere Materialien/Bauteile/Bleche/Profile usw. angeschweißt werden bzw. im Fall der Aluminium-Pulverlegierung verdüst/versprüht werden. Durch die erfindungsgemäße Aluminium-Pulverlegierung und damit hergestellten Drähten, Werkstoffen oder Werkstücken kann eine Verbesserung der statischen und dynamischen Eigenschaften der hergestellten Werkstoffe oder Werkstücke erzielt werden.

Obwohl die vorliegende Erfindung anhand bevorzugter Ausführungsformen vorliegend beschrieben wurde, ist sie darauf nicht beschränkt, sondern auf vielfältige Weise modifizierbar.

Durch die vorliegende Erfindung wird eine scandiumhaltige Aluminium-Pulverlegierung bereitgestellt, welche in pulvertechnischen Verfahren wie dem Additive Layer Manufacturing eingesetzt werden kann. Durch den Einsatz von mittels ALM oder auch anderen pulvertechnischen Verfahren erzeugten Bauteilen können bei sachgemäßer Konstruktion der Bauteile bis zu 50% der Fertigungskosten gegenüber einer differentialen Bauweise (z.B. Verformen, mechanische Bearbeitung, Verbinden der Einzelteile zur Struktur) eingespart werden. Die mittels der erfindungsgemäßen scandiumhaltigen Aluminium-Pulverlegierung hergestellten Werkstücke oder Werkstoffe können daneben, unter anderem, auch Gewichtsvorteile durch eine mögliche Anwendung in dünnwandigen Strukturen mit sich bringen. Die Möglichkeit zum Rührreibschweißen (FSW, Friction Stir Welding) kann durch ein angepasstes FSW-Design von mehreren Teilen ebenfalls der Herstellung von größeren, komplexeren, mittels FSW verbundenen Bauteilen führen. Zudem kann die Bauteilreproduzierbarkeit und Wirtschaftlichkeit gesteigert werden.

Durch das erfindungsgemäße Verfahren zur Herstellung von Werkstoffen oder Werkstücken kann insbesondere eine maßgeschneiderte Fertigung von Bauteile, z.B. mittels ALM, erfolgen. Eine maßgeschneiderte Fertigung von Bauteile mit Endnahkonturen kann z. B. für Bauteile im Flugzeugbau eine Materialersparnis von bis zu 90%, das als Abfall anfällt, mit sich bringen. Darüber hinaus ermöglich dieses Verfahren eine Art Rapid Prototyping für Anwendung in allen Technologiebereichen wie im Automobilbau. usw. Generative Verfahren unterstützen hierbei eine maximale Ausnutzung von Materialien bei gleichzeitiger Bauteilkomplexität in Abhängigkeit vom Fertigungsverfahren. Im Rahmen der ALM-Technologien gibt es hierbei unterschiedliche Herstellungsverfahren wie Pulverbett-, oder Pulverdüsenverfahren oder drahtbasierte Prozesse.

Eine derartige Prozesstechnologie bietet für hochbelastete Konstruktionen/Bauteile einen belastungsoptimierten Bauteilaufbau mit vielseitigen individuellen Gestaltungsmöglichkeiten, und eventuell mit integriertem und integralem Materialaufbau aus unterschiedlichen oder auch "legierungsverwandten" Materialien. Somit lassen sich Eigenschaften einer Struktur mit ebenfalls geringeren Variationen in der Zusammenstellung oder der Struktur gezielt herstellen.

## Patentansprüche

1. Scandiumhaltige Aluminium-Pulverlegierung, umfassend, in Gew.%, bezogen auf die Gesamtzusammensetzung der Legierung
| | |
|---|---|
| Mg | 0,5-10 |
| Sc | 0,4-30 |
| Zr | 0,05-1,5 |
| Mn | 0,01-1,5 |
| Zn | 0-2,0 |
| Ti | 0,01-0,2 |
| Ce | ≤ 0,25 |
| Be | 0-0.004 |
| B | 0-0.008 |
| Si | ≤ 0,25 |
| Fe | ≤ 0,25 |
| Hf | ≤ 0,5 |
mindestens ein Element, ausgewählt aus der Gruppe, bestehend aus der Lanthangruppe außer Cer, Y, Ga, Nb, Ta, W, V, Ni, Co, Mo Li, Th, Ag, wobei der Anteil dieser Elemente maximal 0,5 beträgt
sowie Al als Rest mit weiteren Verunreinigungen von insgesamt maximal 0,5 Gew.%.

2. Scandiumhaltige Aluminium-Pulverlegierung nach Anspruch 1,
**dadurch gekennzeichnet,**
**dass** die Partikel des Pulvers einen Korndurchmesser von 1 bis 250 µm aufweisen

3. Scandiumhaltige Aluminium-Pulverlegierung nach wenigstens einem der vorhergehenden Ansprüche,
**dadurch gekennzeichnet,**
**dass** der Anteil an Zr max. die Hälfte des Sc-Anteils beträgt.

4. Scandiumhaltige Aluminium-Pulverlegierung nach wenigstens einem der vorhergehenden Ansprüche,
**dadurch gekennzeichnet,**
**dass** der Anteil an Zr +Ti in Summe kleiner ist als 1/3 des Anteils an Sc.

5. Draht, umfassend die scandiumhaltige Aluminium-Pulverlegierung nach einem der vorgehenden Ansprüche.

6. Werkstoff oder Werkstück, umfassend die scandiumhaltige Aluminium-Pulverlegierung nach einem der Ansprüche 1 bis 4 oder einen Draht nach Anspruch 5.

7. Werkstoff oder Werkstück nach Anspruch 6,
**dadurch gekennzeichnet,**
**dass** es sich um ein Bauteil, ein Halbzeug, oder einen Schweißzusatzwerkstoff handelt.

8. Werkstoff oder Werkstück nach Anspruch 6 oder 7,
**dadurch gekennzeichnet,**
**dass** die scandiumhaltige Aluminium-Pulverlegierung in einer funktionellen Schicht vorliegt.

9. Verfahren zur Herstellung eines Werkstoffs oder Werkstücks nach einem der Ansprüche 6 bis 8,
**dadurch gekennzeichnet,**
**dass** die scandiumhaltige Aluminium-Pulverlegierung nach einem der Ansprüche 1 bis 4 oder der Draht nach Anspruch 5 erhitzt und im Anschluss mit einer Abkühlrate von mehr als 10 K/s abgekühlt wird.

10. Verfahren nach Anspruch 9,
**dadurch gekennzeichnet,**
**dass** der Werkstoff oder das Werkstück nach dem Abkühlen auf eine Temperatur von 100-400°C erhitzt wird.

11. Verfahren nach Anspruch 9 oder 10,
**dadurch gekennzeichnet,**
**dass** die scandiumhaltige Aluminium-Pulverlegierung nach einem der Ansprüche 1 bis 4 pulvermetallurgisch abgeschieden wird.

12. Verfahren nach Anspruch 11,
**dadurch gekennzeichnet,**
**dass** die pulvermetallurgische Abscheidung unter Verwendung eines inerten Gases erfolgt.

13. Verfahren zur Herstellung einer scandiumhaltigen Aluminium-Pulverlegierung nach einem der Ansprüche 1 bis 4,
**dadurch gekennzeichnet,**
**dass** eine Mischung umfassend, in Gew.%, bezogen auf die Gesamtzusammensetzung der Mischung,
| | |
|---|---|
| Mg | 0,5-10 |
| Sc | 0,4-40 |
| Zr | 0,05-1,5 |
| Mn | 0,01-1,5 |
| Zn | 0-2,0 |
| Ti | 0,01-0,2 |
| Ce | ≤ 0,25 |
| Be | 0-0.004 |
| B | 0-0.008 |
| Si | ≤ 0,25 |
| Fe | ≤ 0,25 |
| Hf | ≤ 0,5 |
mindestens ein Element, ausgewählt aus der Gruppe, bestehend aus der Lanthangruppe außer Cer, Y, Ga, Nb, Ta, W, V, Ni, Co, Mo Li, Th, Ag, wobei der Anteil dieser Elemente maximal 0,5 beträgt,
sowie Al als Rest mit weiteren Verunreinigungen von insgesamt maximal 0,5 Gew.%,
geschmolzen, versprüht oder verdüst und mit einer Abkühlrate von mehr als 10 K/s abgekühlt wird.

14. Verfahren zur Herstellung eines Drahts nach Anspruch 5,
**dadurch gekennzeichnet,**
**dass** die scandiumhaltige Aluminium-Pulverlegierung nach einem der Ansprüche 1 bis 4 verpresst und zu einem Draht gezogen wird.

## Claims

1. Scandium-containing aluminium powder alloy, comprising, in % by weight, based on the total composition of the alloy
| | |
|---|---|
| Mg | 0.5-10 |
| Sc | 0.4-30 |
| Zr | 0.05-1.5 |
| Mn | 0.01-1.5 |
| Zn | 0-2.0 |
| Ti | 0.01-0.2 |
| Ce | ≤ 0.25 |
| Be | 0-0.004 |
| B | 0-0.008 |
| Si | ≤ 0.25 |
| Fe | ≤ 0.25 |
| Hf | ≤ 0.5 |
at least one element selected from the group consisting of the lanthanum group excluding cerium, Y, Ga, Nb, Ta, W, V, Ni, Co, Mo, Li, Th and Ag, wherein the proportion of these elements is not more than 0.5,
and Al as remainder with further impurities of not more than 0.5% by weight in total.

2. Scandium-containing aluminium powder alloy according to Claim 1,
**characterized in that**
the particles of the powder have a grain diameter of 1 to 250 µm.

3. Scandium-containing aluminium powder alloy according to at least one of the preceding claims,
**characterized in that**
the Zr content is at most half of the Sc content.

4. Scandium-containing aluminium powder alloy according to at least one of the preceding claims,
**characterized in that**
the sum total of the Zr + Ti content is smaller than 1/3 of the Sc content.

5. Wire comprising the scandium-containing aluminium powder alloy according to one of the preceding claims.

6. Material or workpiece comprising the scandium-containing aluminium powder alloy according to one of Claims 1 to 4 or a wire according to Claim 5.

7. Material or workpiece according to Claim 6, **characterized in that**
it is a component, a semi-finished product or a welding filler material.

8. Material or workpiece according to Claim 6 or 7,
**characterized in that**
the scandium-containing aluminium powder alloy is present in a functional layer.

9. Method for producing a material or workpiece according to one of Claims 6 to 8,
**characterized in that**
the scandium-containing aluminium powder alloy according to one of Claims 1 to 4 or the wire according to Claim 5 is heated and subsequently cooled at a cooling rate of more than 10 K/s.

10. Method according to Claim 9,
**characterized in that**,
after cooling, the material or the workpiece is heated to a temperature of 100-400°C.

11. Method according to Claim 9 or 10,
**characterized in that**
the scandium-containing aluminium powder alloy according to one of Claims 1 to 4 is deposited by powder metallurgy.

12. Method according to Claim 11,
**characterized in that**
the powder-metallurgical deposition is effected using an inert gas.

13. Method for producing a scandium-containing aluminium powder alloy according to one of Claims 1 to 4,
**characterized in that**
a mixture comprising, in % by weight, based on the total composition of the mixture,
| | |
|---|---|
| Mg | 0.5-10 |
| Sc | 0.4-40 |
| Zr | 0.05-1.5 |
| Mn | 0.01-1.5 |
| Zn | 0-2.0 |
| Ti | 0.01-0.2 |
| Ce | ≤ 0.25 |
| Be | 0-0.004 |
| B | 0-0.008 |
| Si | ≤ 0.25 |
| Fe | ≤ 0.25 |
| Hf | ≤ 0.5 |
at least one element selected from the group consisting of the lanthanum group excluding cerium, Y, Ga, Nb, Ta, W, V, Ni, Co, Mo, Li, Th and Ag, wherein the proportion of these elements is not more than 0.5,
and A1 as remainder with further impurities of not more than 0.5% by weight in total,
is melted, sprayed or atomized and cooled at a cooling rate of more than 10 K/s.

14. Method for producing a wire according to Claim 5,
**characterized in that**
the scandium-containing aluminium powder alloy according to one of Claims 1 to 4 is pressed and drawn to give a wire.

## Revendications

1. Alliage de poudre d'aluminium contenant du scandium, comprenant, en % en poids, par rapport à la composition totale de l'alliage :
| | |
|---|---|
| Mg | 0,5 à 10 |
| Sc | 0,4 à 30 |
| Zr | 0,05 à 1,5 |
| Mn | 0,01 à 1,5 |
| Zn | 0 à 2,0 |
| Ti | 0,01 à 0,2 |
| Ce | ≤ 0,25 |
| Be | 0 à 0,004 |
| B | 0 à 0,008 |
| Si | ≤ 0,25 |
| Fe | ≤ 0,25 |
| Hf | ≤ 0,5 |
au moins un élément, choisi dans le groupe constitué par le groupe du lanthane à l'exception du cérium, Y, Ga, Nb, Ta, W, V, Ni, Co, Mo, Li, Th, Ag, la proportion de cet élément étant d'au plus 0,5,
ainsi qu'Al en tant que résidu, avec des impuretés supplémentaires d'au total au plus 0,5 % en poids.

2. Alliage de poudre d'aluminium contenant du scandium selon la revendication 1, **caractérisé en ce que** les particules de la poudre présentent un diamètre de grain de 1 à 250 µm.

3. Alliage de poudre d'aluminium contenant du scandium selon au moins l'une quelconque des revendications précédentes, **caractérisé en ce que** la proportion de Zr est d'au plus la moitié de la proportion de Sc.

4. Alliage de poudre d'aluminium contenant du scandium selon au moins l'une quelconque des revendications précédentes, **caractérisé en ce que** la proportion de Zr + Ti est au total inférieure à 1/3 de la proportion de Sc.

5. Fil, comprenant l'alliage de poudre d'aluminium contenant du scandium selon l'une quelconque des revendications précédentes.

6. Matériau ou pièce, comprenant l'alliage de poudre d'aluminium contenant du scandium selon l'une quelconque des revendications 1 à 4 ou un fil selon la revendication 5.

7. Matériau ou pièce selon la revendication 6, caractérisé ou **caractérisée en ce qu'**il s'agit d'un composant, d'un semi-fini ou d'un matériau d'apport de soudure.

8. Matériau ou pièce selon la revendication 6 ou 7, caractérisé ou **caractérisée en ce que** l'alliage de poudre d'aluminium contenant du scandium est présent dans une couche fonctionnelle.

9. Procédé de fabrication d'un matériau ou d'une pièce selon l'une quelconque des revendications 6 à 8, **caractérisé en ce que** l'alliage de poudre d'aluminium contenant du scandium selon l'une quelconque des revendications 1 à 4 ou le fil selon la revendication 5 est chauffé, puis refroidi à une vitesse de refroidissement de plus de 10 K/s.

10. Procédé selon la revendication 9, **caractérisé en ce que** le matériau ou la pièce est porté à une température de 100 à 400 °C après le refroidissement.

11. Procédé selon la revendication 9 ou 10, **caractérisé en ce que** l'alliage de poudre d'aluminium contenant du scandium selon l'une quelconque des revendications 1 à 4 est déposé par une technique de métallurgie des poudres.

12. Procédé selon la revendication 11, **caractérisé en ce que** le dépôt par une technique de métallurgie des poudres a lieu en utilisant un gaz inerte.

13. Procédé de fabrication d'un alliage de poudre d'aluminium contenant du scandium selon l'une quelconque des revendications 1 à 4, **caractérisé en ce qu'**un mélange comprenant, en % en poids, par rapport à la composition totale du mélange :
Mg 0,5 à 10
Sc 0,4 à 40
Zr 0,05 à 1,5
Mn 0,01 à 1,5
Zn 0 à 2,0
Ti 0,01 à 0,2
Ce ≤ 0,25
Be 0 à 0,004
B 0 à 0,008
Si ≤ 0,25
Fe ≤ 0,25
Hf ≤ 0,5
au moins un élément, choisi dans le groupe constitué par le groupe du lanthane à l'exception du cérium, Y, Ga, Nb, Ta, W, V, Ni, Co, Mo, Li, Th, Ag, la proportion de cet élément étant d'au plus 0,5,
ainsi qu'Al en tant que résidu, avec des impuretés supplémentaires d'au total au plus 0,5 % en poids,
est fondu, pulvérisé ou atomisé, et refroidi à une vitesse de refroidissement de plus de 10 K/s.

14. Procédé de fabrication d'un fil selon la revendication 5, **caractérisé en ce que** l'alliage de poudre d'aluminium contenant du scandium selon l'une quelconque des revendications 1 à 4 est pressé et étiré en un fil.
